# FASCICULE DE BREVET EUROPEEN

(11) **EP 1 426 453 B1**
(45) Date de publication et mention de la délivrance du brevet: **29.07.2009**
(21) Numéro de dépôt: 03292995.2
(22) Date de dépôt: 01.12.2003
(51) Int. Cl.: C21D 8/00, C22C 38/04, C22C 38/02

(54) **Procédé de fabrication d'une pièce forgée en acier**
Verfahren zur Herstellung von einem geschmiedeten Teil aus Stahl
Process for the production of a steel forged part

(30) Priorité: 03.12.2002 FR 0215225
(43) Date de publication de la demande: 09.06.2004
(73) Titulaire: ASCOMETAL, 92400 Courbevoie (FR)
(72) Inventeur: Michaud, Hervé, 57000 Metz (FR); Dierickx, Pierre, 57100 Thionville (FR); Andre, Gaëlle, 57950 Montigny Les Metz (FR)
(74) Mandataire: Neyret, Daniel Jean Marie

(56) Documents cités:
- EP-A- 0 312 054
- EP-A- 0 775 756
- FR-A- 2 744 733
- PATENT ABSTRACTS OF JAPAN vol. 008, no. 168 (C-236), 3 août 1984 (1984-08-03) & JP 59 067365 A (DAIDO TOKUSHUKO KK;OTHERS: 01), 17 avril 1984 (1984-04-17) -& DATABASE WPI Derwent Publications Ltd., London, GB; AN 1985-008423 XP002273668 -& JP 59 067365 A (DAIZ AN HOND) 17 avril 1984 (1984-04-17)
- PATENT ABSTRACTS OF JAPAN vol. 2000, no. 26, 1 juillet 2002 (2002-07-01) & JP 2001 254143 A (ISUZU MOTORS LTD;SUMITOMO METAL IND LTD), 18 septembre 2001 (2001-09-18) -& DATABASE WPI Derwent Publications Ltd., London, GB; AN 2002-143213 XP002273669 -& JP 2001 254143 A (ISUZU MOTORS LTD) 18 septembre 2001 (2001-09-18)
- QUATREMER R ET AL: "Précis de Construction Mécanique. Tome 1: Dessin, conception et normalisation" 1983, CONSTRUCTION MECANIQUE, PAGE(S) 144-145 , XP002243512 * page 144, alinéa 1-5. *

## Description

L'invention concerne la métallurgie, et plus précisément le domaine des aciers destinés à la fabrication des pièces forgées devant résister à d'importantes sollicitations.

Souvent, de telles pièces sont réalisées en fonte, particulièrement en fonte GS à structure perlitique, ou en acier forgé à structure ferrito-perlitique qui sont censés offrir une meilleure résistance en fatigue que les fontes. Les vilebrequins de moteurs à explosion sont un exemple de telles pièces.

Les zones à fortes concentration de contraintes peuvent être renforcées par divers traitements thermochimiques, thermiques ou mécaniques, tels que la nitruration, la trempe par induction, le galetage, le grenaillage.

On rappelle que le galetage appliqué à un vilebrequin (cette application n'étant pas exclusive) consiste à mettre en contact deux galets et les gorges du maneton. Les galets sont orientés obliquement par rapport aux gorges et on leur applique une force normale. Le vilebrequin est mis en rotation et la force normale est appliquée progressivement par les galets pendant un nombre n₁ de tours, puis maintenue à une valeur constante pendant n₂ tours, puis relâchée progressivement pendant n₃ tours. Ce galetage crée des contraintes résiduelles de compression sur une profondeur de 4 à 5 mm. Il permet d'améliorer sensiblement les performances de tenue en fatigue des vilebrequins en fonte GS à structure ferrito-perlitique. Toutefois, du fait des meilleures performances en fatigue du métal de base, l'endurance après galetage des vilebrequins en acier forgé à structure ferrito-perlitique demeure supérieure à celle des vilebrequins en fonte GS. C'est pourquoi l'acier à structure ferrito-perlitique est employé de manière privilégiée dans les moteurs à essence les plus fortement sollicités et dans les moteurs diesel à injection directe. Il faut également veiller à ce que des ruptures ne se produisent pas hors des zones renforcées, ce qui justifie le choix d'un métal à hautes caractéristiques.

Des aciers forgés à structure ferrito-perlitique souvent employés à cet effet sont des types XC70, 45Mn5, 30MnSiV6 et 38MnSiV5, et subissent après forgeage un simple refroidissement en ligne à l'air calme. Leur méthode de mise en oeuvre est donc relativement économique, mais leur durée de vie en présence de fortes sollicitations est limitée.

On a déjà proposé de réaliser de telles pièces en acier bainitique à partir d'une nuance de type 35MnV7, le refroidissement après forgeage ayant lieu à l'air pulsé. Les performances de tenue sont sensiblement améliorées par rapport aux exemples précédents, mais le procédé de fabrication est plus coûteux. De plus, il n'est pas toujours possible d'adapter à ce procédé une ligne de fabrication initialement conçue pour fabriquer ces pièces par refroidissement à l'air calme.

Le document EP-A-0 312 054 divulgue la fabrication d'une pièce forgée en acier, comme par exemple un vilebrequin, dont le procédé comprend les étapes suivantes:
- élaboration et coulée d'un acier de composition en pourcentages pondéraux: 0,30-0,50% C, 0,10-0,50% Si, 0,50-1,00% Mn, 0,04-0,12% S, 0,05-0,20% V, 0,005-0,018% Al, 0,05-0,30% Pb, 0,001-0,006% Ca, et 0,50% ou moins Cr, reste Fe et impuretés inévitables;
- forgeage à une température comprise entre 1100 et 1200°C;
- refroidissement après forgeage à l'air à une vitesse de 1 à 100°C/minute entre 800 et 600°C.

Les documents JP-A-59-067365 et JP-A-2001-254143 divulguent également la fabrication d'une pièce forgée en acier, comme par exemple un vilebrequin, dont le procédé comprend le forgeage suivi d'un refroidissement à l'air.

Le but de l'invention est de proposer une association entre une nuance d'acier et un procédé de fabrication d'une pièce forgée, telle qu'un vilebrequin de moteur à explosion, présentant des avantages économiques par rapport aux associations existantes sans que les performances métallurgiques soient altérées, voire en améliorant ces performances. La pièce ainsi fabriquée devra résister à d'importantes sollicitations en fatigue. Ce procédé de fabrication devrait, en particulier, être adaptable sur toute ligne de forgeage.

A cet effet, l'invention a pour objet un procédé de fabrication d'une pièce forgée en acier, caractérisé en ce que :
- on élabore et on coule un acier de composition, en pourcentages pondéraux, 0,06% ≤ C ≤ 0,35% ; 0,5% ≤ Mn ≤ 2% ; traces ≤ Si ≤ 2% ; traces ≤ Ni % ≤ 1,5 % ; traces ≤ Al ≤ 0,1 % ; traces ≤ Cr ≤ 1,5% ; traces ≤ Mo ≤ 0,30% ; traces ≤ V ≤ 0,5% ; traces ≤ Cu ≤ 1,5 % ; le reste étant du fer et des impuretés résultant de l'élaboration ;
- on forge une ébauche de la pièce à une température de 1100 à 1300°C ;
- on effectue un refroidissement contrôlé de l'ébauche de la pièce à l'air calme ou à l'air pulsé à une vitesse inférieure ou égale à 3°C/s entre 600 et 300°C, conférant à l'ébauche une microstructure bainitique ;
- on effectue l'usinage de la pièce ;
- et on effectue une opération de renforcement mécanique de la pièce à des endroits appelés à être particulièrement sollicités.

De préférence, l'acier contient de 5 à 50 ppm de B.

De préférence, l'acier contient de 0,005 à 0,04% de Ti.

Si du B est présent, la teneur en Ti est de préférence égale à au moins 3,5 fois la teneur en N de l'acier.

De préférence, l'acier contient de 0,005 à 0,06% de Nb.

De préférence, l'acier contient de 0,005 à 0,2% de S.

Dans ce cas, de préférence, l'acier contient au moins un des éléments Ca jusqu'à 0,007%, Te jusqu'à 0,03%, Se jusqu'à 0,05%, Bi jusqu'à 0,15% et Pb jusqu'à 0,15%.

Selon une première forme de l'invention, la teneur en C de l'acier est comprise entre 0,06 et 0,20%.

La teneur en Mn de l'acier est alors de préférence comprise entre 0,5 et 1,5%, et la teneur en Cr est de préférence comprise entre 0,5 et 1,5%.

Dans ce cas, la teneur en Cu de l'acier peut être comprise entre 0,5 et 1,5%.

Selon une autre forme de l'invention, la teneur en C de l'acier est comprise entre 0,25 et 0,35%, la teneur en Si est comprise entre des traces et 0,5%, la teneur en Mn est comprise entre 0,8 et 2%, la teneur en Cr est comprise entre 0,5 et 1,5%, la teneur en Mo est comprise entre 0,05 et 0,20%, la teneur en B est comprise entre 5 et 50ppm, la teneur en Ti est comprise entre 0,005 et 0,04%.

Selon une autre forme de l'invention, la teneur en C de l'acier est comprise entre 0,20 et 0,35%, la teneur en Si est comprise entre 0,5 et 2%, la teneur en Mn est comprise entre 0,8 et 2%, la teneur en Cr est comprise entre 0,5 et 1,5%, la teneur en Mo est comprise entre 0,05 et 0,20%, la teneur en B est comprise entre des traces et 50 ppm et la teneur en Ti est comprise entre des traces et 0,04%.

Dans ce cas, on peut pratiquer un revenu à 300-500°C pendant 1 à 3h après l'usinage ou après le refroidissement contrôlé à l'air et avant l'usinage.

L'opération de renforcement mécanique peut être un galetage.

La pièce forgée obtenue par le procédé selon l'invention peut être constituée par un vilebrequin pour moteur à explosion.

L'opération de renforcement mécanique est alors de préférence réalisée sur les congés de raccordement des manetons et les paliers du vilebrequin.

Comme on l'aura compris, l'invention consiste en la combinaison d'une nuance d'acier et d'un procédé de traitement suivant la coulée comprenant une étape de forgeage de la pièce, un refroidissement pouvant être effectué à l'air calme ou à l'air pulsé et un renforcement mécanique des zones de la pièce qui seront les plus sollicitées. La composition de l'acier choisie garantit que, quel que soit le mode de refroidissement, les résultats de tenue en fatigue des pièces forgées à partir de cet acier renforcées mécaniquement aux endroits les plus sollicités, seront suffisants pour répondre aux exigences des utilisateurs. La fabrication de vilebrequins de moteurs à explosion à hautes performances est une application privilégiée des pièces forgées obtenues par le procédé selon l'invention.

Habituellement, le critère de détermination du caractère adapté ou non d'un acier aux utilisations qui viennent d'être décrites est la limite d'endurance en fatigue du matériau initialement à l'état non fissuré, en prenant en compte les contraintes résiduelles introduites en surface par le renforcement mécanique.

Les inventeurs se sont rendu compte que ce critère n'était, en fait, pas pertinent. En effet, les contraintes résiduelles provoquées par le galetage (ou un autre type de renforcement mécanique) se relaxent en surface dès les premiers cycles sur une profondeur de quelques 1/10 de mm, et le matériau se fissure rapidement sur cette épaisseur. Toutefois, la propagation des fissures se bloque du fait du champ de contraintes résiduelles initial introduit par le galetage. La décroissance de la concentration de contraintes dans la gorge de raccordement joue également ce rôle. Mais il ne se produit pas de relaxation en profondeur.

Plus le galetage est effectué à une pression élevée, plus la concentration de contraintes est élevée et plus la fissuration est facile. En contrepartie, comme la forte pression de galetage a formé des contraintes résiduelles sur une profondeur plus importante, ces fissures sont bloquées sur de plus grandes distances et pour des moments plus grands, ce qui limite les risques de rupture de la pièce. De manière générale, on considère cependant qu'optimalement la fissuration ne doit pas se produire, de manière à ne pas donner lieu à des résonances et aux bruits associés lors de l'utilisation du vilebrequin, pour ne parler que de cette application privilégiée des pièces forgées obtenues par le procédé selon l'invention.

Les caractéristiques chimiques de l'acier et ses traitements thermomécaniques postérieurs à la coulée visent à l'obtention d'une microstructure bainitique, et également à l'obtention de caractéristiques mécaniques optimisées après un traitement de renforcement mécanique tel qu'un galetage. Cette microstructure bainitique doit pouvoir être obtenue à la suite d'un refroidissement à l'air calme, mais doit aussi être compatible avec un refroidissement à l'air pulsé. De cette façon, les pièces obtenues par le procédé selon l'invention pourront être produites sur toute installation existante, que celle-ci permette après forgeage un refroidissement à air pulsé, ou qu'elle ne permette qu'un refroidissement à l'air calme. Ainsi, une installation de forgeage initialement conçue pour traiter des pièces en acier à microstructure ferrito-perlitique pourra sans difficulté, et sans adaptation particulière, traiter des pièces à microstructure bainitique obtenues par le procédé selon l'invention. Les aciers à microstructure bainitique précédemment employés pour ces usages exigeaient un refroidissement à air pulsé, et ne pouvaient donc pas toujours être traités sur des installations de conception courante.

Selon l'invention, on commence donc par élaborer un acier dont la composition sera détaillée et justifiée plus loin, puis on le coule, en lingots ou en continu suivant le format de la pièce finale, de manière à obtenir un demi-produit.

On effectue ensuite une opération de forgeage du demi-produit. Ce forgeage est suivi par un refroidissement contrôlé à l'air dans la chaude de forge, à l'air calme ou à l'air pulsé.

On effectue ensuite, de manière classique, un usinage de la pièce, puis une opération de renforcement mécanique en certains points appelés à être particulièrement sollicités lors de l'utilisation de la pièce. Dans le cas d'un vilebrequin, on effectue par exemple un galetage des congés de raccordement des manetons.

Les fourchettes analytiques exigées sont les suivantes pour les différents éléments chimiques devant ou pouvant être présents (tous les pourcentages sont pondéraux).

La teneur en carbone est comprise entre 0,06 et 0,35%. Cette teneur permet de gouverner le type de microstructure obtenu. A moins de 0,06%, la microstructure obtenue ne serait pas intéressante pour les objectifs visés. Au-delà de 0,35%, en combinaison avec les autres éléments, on n'obtiendrait pas une microstructure suffisamment bainitique après refroidissement à l'air calme.

La teneur en manganèse est comprise entre 0,5 et 2%. Cet élément ajouté à plus de 0,5% procure sa trempabilité au matériau, et permet d'obtenir un domaine bainitique large quel que soit le mode de refroidissement. Une teneur supérieure à 2% serait cependant susceptible de provoquer des ségrégations trop importantes.

La teneur en silicium est comprise entre des traces et 2%. Cet élément, non obligatoire à proprement parler, est avantageux en ce qu'il durcit la bainite par son passage en solution solide. Une teneur supérieure à 2% peut cependant poser des problèmes d'usinabilité du matériau. De plus, le silicium gêne la formation des carbures, et on risquerait alors de former trop d'austénite résiduelle, voire de la martensite, en quantités trop importantes lors du refroidissement.

La teneur en nickel est comprise entre des traces et 1,5%. Cet élément non obligatoire favorise la trempabilité et la stabilisation de l'austénite. Au cas où du cuivre serait présent en quantité relativement importante, le nickel permet d'éviter les problèmes associés à cette présence de cuivre lors du forgeage. Au-delà de 1,5%, l'addition de nickel est inutilement coûteuse au vu des objectifs métallurgiques visés.

La teneur en aluminium est comprise entre des traces et 0,1%. Cet élément non obligatoire est un désoxydant fort, et même ajouté à faible teneur, il permet de limiter la quantité d'oxygène dissous dans l'acier liquide, donc d'améliorer la propreté inclusionnaire de la pièce si on a su éviter des réoxydations trop importantes lors de la coulée.

La teneur en chrome, élément non obligatoire, est comprise entre des traces et 1,5%. Comme le manganèse, le chrome contribue à l'amélioration de la trempabilité. Son addition devient inutilement coûteuse au-delà de 1,5%.

La teneur en molybdène est comprise entre des traces et 0,3%. Cet élément, non obligatoire, empêche la formation de ferrite à gros grains et permet d'obtenir plus assurément la structure bainitique. Son addition est inutilement coûteuse au-delà de 0,3%.

La teneur en vanadium est comprise entre des traces et 0,5%. Cet élément, non obligatoire, sert à durcir la bainite par son passage en solution solide. Son addition est inutilement coûteuse au-delà de 0,5%.

La teneur en cuivre est comprise entre des traces et 1,5%. Cet élément non obligatoire, peut améliorer l'usinabilité et, en précipitant, provoquer un durcissement secondaire du matériau. Comme on l'a dit, il est conseillé de lui associer une teneur en nickel significative pour minimiser les problèmes de mise en forme à chaud. Au-delà de 1,5%, son addition est inutilement coûteuse.

Les éléments que l'on vient de citer sont ceux dont le rôle métallurgique est ou peut être le plus important pour l'invention, mais d'autres éléments que l'on va citer peuvent être optionnellement présents pour améliorer certaines propriétés de l'acier.

La teneur en bore peut être comprise entre 5 et 50 ppm. Il peut améliorer la trempabilité, mais doit être en solution solide pour être efficace. Autrement dit, on doit éviter que tout le bore ou presque ne se retrouve sous la forme de nitrures ou carbonitrures de bore. A cet effet, il est conseillé d'associer à l'addition de bore une addition de titane, de préférence dans une proportion telle que 3,5 x N% ≤ Ti%. A cette dernière condition, on peut capter tout l'azote dissous et éviter la formation de nitrures ou carbonitrures de bore. La teneur minimale en titane, à cet effet, est de 0,005%, pour les teneurs en azote les plus basses usuellement rencontrées. Il est cependant conseillé de ne pas dépasser une teneur en titane de 0,04%, sinon on obtient des nitrures de titane de taille trop élevée.

Le titane a également pour fonction de limiter le grossissement du grain austénitique à haute température, et peut, pour cela, être ajouté indépendamment du bore.

Du niobium peut également être ajouté, à des teneurs comprises entre 0,005 et 0,06%. Lui aussi peut précipiter sous forme de carbonitrures dans l'austénite, et peut ainsi apporter un durcissement du matériau.

Enfin, de manière classique, on peut améliorer l'usinabilité du matériau par une addition de soufre (de 0,005% à 0,2%), à laquelle on peut aussi associer une addition de calcium (jusqu'à 0,007%), et/ou de tellure (jusqu'à 0,03%) et/ou de sélénium (jusqu'à 0,05%), et/ou de bismuth (jusqu'à 0,15%) et/ou de plomb (jusqu'à 0,15%).

Une fois obtenu le demi-produit ayant la composition précédemment citée, on procède au forgeage de l'ébauche de la pièce selon les procédés habituels. On la chauffe jusqu'à 1100 - 1300°C, puis on exécute les déformations donnant naissance à l'ébauche de pièce, que l'on ébavure et finit comme d'habitude.

Puis après le forgeage, on effectue un refroidissement contrôlé de la pièce, soit à l'air calme, soit à l'air pulsé. De manière générale, on impose à la pièce un refroidissement à une vitesse inférieure ou égale à 3°C/s entre 600 et 300°C pour obtenir une microstructure bainitique.

Puis on procède à l'usinage de la pièce, comme habituellement, dans des conditions à moduler selon les caractéristiques de dureté obtenues.

Enfin, on procède à l'opération de renforcement mécanique de la pièce aux endroits appelés à être particulièrement sollicités en service. Dans le cas des vilebrequins de moteurs à explosion, cette opération peut consister en un galetage des congés des manetons et des paliers.

Pour obtenir des pièces de caractéristiques optimales pour leurs diverses applications, on peut envisager diverses formes de l'invention.

Selon une première forme de l'invention, on limite la teneur en carbone à 0,06-0,2%, de manière à obtenir une bainite bas carbone très écrouissable. Optimalement, la teneur en manganèse doit être comprise entre 0,5 et 1,5%, la teneur en chrome entre 0,5 et 1,5%.

Pour ces aciers, les caractéristiques de traction (limite d'élasticité, résistance) du produit obtenu ne sont pas particulièrement élevées : typiquement la résistance à la traction Rm est de l'ordre de 800-900 MPa et la limite d'élasticité Re de l'ordre de 550 à 650 MPa. Mais ces aciers présentent une bonne usinabilité, qui peut être améliorée par un ajout de cuivre à raison de 0,5 à 1,5%.

Selon d'autres formes de l'invention, on règle la teneur en carbone à une valeur plus élevée que dans la première forme, comprise entre 0,20 et 0,35%, de manière à obtenir sur le produit final une microstructure constituée de bainite à moyen carbone. Cette structure procure au produit des caractéristiques mécaniques élevées directement après le refroidissement contrôlé à l'air.

Si la teneur en carbone est comprise entre 0,25 et 0,35% et la teneur en silicium inférieure ou égale à 0,5%, on obtient une structure composée de bainite supérieure. Avec une teneur en manganèse de 0,8 à 2%, une teneur en chrome de 0,5 à 1%, une teneur en molybdène de 0,05 à 0,2% et des teneurs en bore et titane conformes à ce qui été précédemment conseillé, on obtient une pièce présentant une bonne écrouissabilité, une résistance à la traction de l'ordre de 900 à 1000 MPa, une limite d'élasticité comprise entre 600 et 700 MPa, et une usinabilité qui demeure satisfaisante notamment en présence de cuivre qui a pu commencer à précipiter lors du refroidissement suivant le forgeage.

Si la teneur en carbone est comprise entre 0,20 et 0,35%, la teneur en silicium comprise entre 0,5 et 2%, la teneur en manganèse comprise entre 0,8 et 2%, la teneur en chrome comprise entre 0,5 et 1%, la teneur en molybdène comprise entre 0,05 et 0,2%, on obtient une structure composée de bainite mixte (granulaire + supérieure). Cette structure donne à la pièce une bonne limite d'endurance et une bonne aptitude au renforcement mécanique par grenaillage, écrouissage, galetage, préconformage, etc. On pense que la présence d'austénite résiduelle relativement molle améliore l'écrouissabilité, donc la mise en précontrainte par le renforcement mécanique. Les enfoncements des gorges des congés de raccordement sont relativement faibles, ce qui diminue la concentration de contraintes et augmente la résistance à la fissuration. On obtient typiquement une résistance à la traction de l'ordre de 950 à 1250 MPa et une limite d'élasticité de l'ordre de 600 à 800 MPa qui sont réglées par la teneur en silicium. L'usinabilité reste acceptable et peut être améliorée par les additions précédemment décrites à cet effet. Un ajout de bore (jusqu'à 50 ppm) et/ou de titane (jusqu'à 0,04%) peut également être conseillé pour les raisons qui ont été dites.

Dans cette dernière forme de l'invention, on peut, de plus, pratiquer un léger revenu à 300 - 500°C pendant 1 à 3h. On transforme ainsi l'austénite résiduelle en ferrite et carbures, ce qui permet une légère augmentation de la limite d'élasticité sans baisse de la résistance à la traction. On améliore de ce fait la tenue en fatigue d'environ 10%. Ce revenu peut être effectué après l'usinage ou après le refroidissement et avant l'usinage.

On va à présent décrire deux exemples d'applications de l'invention et un exemple comparatif.

Les essais mécaniques qui vont être décrits ont été réalisés (comme il est classique lorsqu'on veut tester des matériaux pour vilebrequins) sur des éprouvettes dont la géométrie permet de reproduire les sollicitations des raccordements d'un maneton de vilebrequin qui travaille en flexion, et qui ont subi un cycle thermique identique à celui induit par le forgeage d'un vilebrequin. Elles ont aussi subi un galetage dans des conditions analogues à celles d'un galetage classiquement effectué sur les congés de raccordement des manetons d'un vilebrequin.

A titre de référence, on a procédé à des essais sur des éprouvettes en un acier de type 38MnSiV5 à structure ferrito-perlitique, de composition C = 0,38% ; Mn = 1,4% ; Si = 0,5% ; S = 0,075% ; Ni = 0,1% ; Cr = 0,2% ; Mo = 0,03% ; Cu : 0,02% ; V = 0,09% ; N = 130 ppm. Ces éprouvettes sont découpées dans un acier qui a subi un laminage suivi d'un refroidissement à l'air calme (0,5 à 1 °C/s) qui lui ont procuré une résistance à la traction de 860 MPa et une limite d'élasticité de 570 MPa.

Le galetage a été effectué avec des galets inclinés de 35° par rapport à la verticale, sur des gorges de 1,35mm de rayon, avec une gorge de déplacement (« undercut ») d'environ 0,6mm. Les charges appliquées lors du galetage ont varié de 800 à 1200 daN.

Dans ces conditions, on a obtenu des moments de 2090 à 1850 N.m pour l'amorçage des fissures, et des moments de rupture de 4050 à 4620 N.m (remarquons que lorsque la charge appliquée augmente, le moment nécessaire pour l'amorçage des fissures diminue mais le moment de rupture augmente).

On a exécuté les mêmes essais sur des éprouvettes d'un acier à structure bainitique correspondant au procédé l'invention, de composition C = 0,24% ; Mn = 1,50% ; Si = 0,7% ; S = 0,077% ; Ni = 0,1% ; Cr = 0,8% ; Mo = 0,07% ; Cu = 0,1% ; V = 0,19% ; B = 30ppm ; Ti = 0,019% ; N = 70 ppm. Cet acier a donc une composition correspondant au procédé selon l'invention selon la forme précédemment décrite à teneur en carbone élevée, dans sa version à silicium élevé où une structure de bainite mixte est obtenue après un forgeage et un refroidissement à l'air calme (0,5 à 1 °C/s). Aucun revenu postérieur n'a été effectué. Dans ces conditions, on obtient une résistance à la traction de 1000MPa et une limite d'élasticité de 640MPa, ce qui est significativement meilleur que pour l'acier de référence.

On a effectué un galetage de l'éprouvette dans les mêmes conditions que pour l'éprouvette de référence, toujours avec des charges appliquées de 800 à 1200 daN.

Dans ces conditions on a obtenu des moments d'amorçage des fissures de 2650 à 2400 N.m, et des moments de rupture de 5200 à 5900 N.m. On obtient une amélioration très significative de ces deux limites, de l'ordre de 30%, grâce à l'invention.

Les inventeurs expliquent ce résultat par une meilleure aptitude de l'éprouvette élaborée selon le procédé de l'invention à une faible relaxation des contraintes pour une charge donnée. Cela procure un plus important blocage des fissures déjà amorcées. La limite d'amorçage des fissures est améliorée du fait d'un moindre enfoncement des gorges par les galets : la concentration des contraintes est plus faible et la résistance à la traction est plus élevée.

Les inventeurs ont également remarqué, par des essais de diffraction des rayons X, que les aciers ferrito-perlitiques habituels subissent un adoucissement plus important que les aciers obtenus par le procédé de l'invention, qui ont même, au contraire, tendance à se renforcer au cours de leur utilisation.

L'intérêt principal de l'invention est que pour des charges de galetage plus faibles, on obtient les mêmes résultats en termes de propriétés mécaniques qu'avec des nuances ferrito-perlitiques classiques. On peut ainsi économiser les galets, ce qui abaisse le prix de revient de l'opération de galetage. Cela permet de compenser le surcoût dû à la plus forte présence d'éléments d'alliage dans l'acier.

On a également effectué des essais sur des éprouvettes d'un acier à structure bainitique obtenues par le procédé correspondant à l'invention, de composition C = 0,06% ; Mn = 1,35% ; Cr = 0,9% ; Si = 0,39% ; Ni = 0,25% ; S = 0,003% ; Cu = 0,22% ; V = traces ; N = 0,007% ; Mo = 0,09% et B = 0,003%. Cet acier a une composition correspondant à la première forme de l'invention. Le refroidissement à l'air pulsé effectué a approché la vitesse de 2 à 3°C/s entre 600 et 300°C. Dans ces conditions on obtient une résistance à la traction de 820MPa et une limite d'élasticité de 550MPa, ce qui est comparable à l'acier de référence. On a effectué un galetage de l'éprouvette dans les mêmes conditions que pour l'éprouvette de référence, toujours avec des charges appliquée de 800 à 1200daN. Dans ces conditions on a obtenu des moments d'amorçage des fissures de 2300 à 2500Nm et des moments de rupture de 5600 à 6120Nm. Là encore on obtient une amélioration très significative de ces deux limites, de l'ordre de 20 et 35% respectivement, grâce à l'invention.

On rappelle enfin que les nuances d'acier utilisées dans le procédé de l'invention peuvent subir aussi bien un refroidissement à l'air calme qu'un refroidissement à l'air pulsé, ce qui rend leur traitement possible sur toute installation de forgeage existante.

## Revendications

1. Procédé de fabrication d'une pièce forgée en acier, **caractérisé en ce que**:
- on élabore et on coule un acier de composition, en pourcentages pondéraux, 0,06% ≤ C ≤ 0,35% ; 0,5% ≤ Mn ≤ 2% ; traces ≤ Si ≤ 2% ; traces ≤ Ni ≤ 1,5% ; traces ≤ Al ≤ 0,1% ; traces ≤ Cr ≤ 1,5% ; traces ≤ Mo ≤ 0,30% ; traces ≤ V ≤ 0,5% ; traces ≤ Cu ≤ 1,5% optionnellement de 5 à 50 ppm de B; optionnellement 2 de 0,005 à 0,04% de Ti; optionnellement de 0,005 à 0,06% de Nb; optionnellement de 0,005 à 0,2% de S; optionnellement au moins un des éléments Ca jusqu'à 0,007%, Te jusqu'à 0,03%, Se jusqu'à 0,05%, Bi jusqu'à 0,15% et Pb jusqu'à 0,15% ; le reste étant du fer et des impuretés résultant de l'élaboration;
- on forge une ébauche de la pièce à une température de 1100 à 1300C;
- on effectue un refroidissement contrôlé de l'ébauche de la pièce à l'air calme ou à l'air pulsé à une vitesse inférieure ou égale à 3°C/s entre 600 et 300°C, conférant à l'ébauche une microstructure bainitique ;
- on effectue l'usinage de la pièce ;
- est on effectue une opération de renforcement mécanique de la pièce à des endroits appelés à être particulièrement sollicités.

2. Procédé selon la revendication 1;
**caractérisé en ce que** l'acier contient du B et du Ti et que la teneur en Ti est égale à au moins 3,5 fois la teneur en N de l'acier.

3. Procédé selon l'une des revendications 1 à 2, **caractérisé en ce que** la teneur en C de l'acier est comprise entre 0,06 et 0,20%.

4. Procédé selon la revendication 3, **caractérisé en ce que** la teneur en Mn de l'acier est comprise entre 0,5 et 1,5%, et **en ce que** la teneur en Cr est comprise entre 0,5 et 1,5%.

5. Procédé selon l'une des revendications 3 ou 4, **caractérisé en ce que** la teneur en Cu de l'acier est comprise entre 0,5 et 1,5%.

6. Procédé selon l'une des revendications 1 à 2, **caractérisé en ce que** la teneur en C de l'acier est comprise entre 0,25 et 0,35%, la teneur en Si est comprise entre des traces et 0,5%, la teneur en Mn est comprise entre 0,8 et 2%, la teneur en Cr est comprise entre 0,5 et 1.5%, la teneur en Mo est comprise entre 0,05 et 0,20%, la teneur en B est comprise entre 5 et 50 ppm, et la teneur en Ti est comprise entre 0,005 et 0,04%.

7. Procédé selon l'une des revendications 1 à 2, **caractérisé en ce que** la teneur en C de l'acier est comprise entre 0,20 et 0,35%, la teneur en Si est comprise entre 0,5 et 2%, la teneur en Mn est comprise entre 0,8 et 2%, la teneur en chrome est comprise entre 0,5 et -1,5%, la teneur en molybdène est comprise entre 0,05 et 0,20%, la teneur en bore est comprise entre des traces et 50 ppm et la teneur en Ti est comprise entre 0.005 et 0,04%.

8. Procédé selon la revendication 7, **caractérisé en ce que** l'on pratique un revenu à 300 - 500°C pendant 1 à 3h après l'usinage ou après le refroidissement contrôlé à l'air et avant l'usinage.

9. Procédé selon l'une des revendications 1 à 8, **caractérisé en ce que** l'opération de renforcement mécanique est un galetage.

10. Procédé selon la revendication 9, **caractérisé en ce** la pièce est constituée par un vilebrequin pour moteur à explosion.

11. Procédé selon la revendication 10, **caractérisé en ce que** l'opération de renforcement mécanique est réalisée sur les congés de raccordement des manetons et les paliers du vilebrequin.

## Claims

1. Method of manufacturing a forged steel part, **characterised in that**:
- a steel is worked and cast, having a composition in percentages by weight of 0.06 % C ≤ 0.35%; 0.5% ≤ Mn ≤ 2%; traces ≤ Si ≤ 2%; traces ≤ Ni% ≤ 1.5%; traces ≤ Al ≤ 0.1%; traces ≤ Cr ≤ 1.5%; traces ≤ Mo ≤ 0.30%; traces ≤ V ≤ 0.5%; traces ≤ Cu ≤ 1.5%, optionally 5 to 50 ppm of B; optionally 0.005 to 0.04% of Ti; optionally 0.005 to 0.06% of Nb; optionally 0.005 to 0.2% of S; optionally at least one of the elements Ca, up to 0.007%, Te, up to 0.03%, Se, up to 0.05%, Bi, up to 0.15% and Pb, up to 0.15%; the remainder being iron and impurities resulting from the working;
- a blank of the part is forged at a temperature of 1100 to 1300°C;
- controlled cooling of the blank of the part is carried out in still air or in pulsed air at a rate of less than or equal to 3°C/s between 600 and 300°C, giving the blank a bainitic microstructure;
- the part is machined;
- and an operation of mechanical strengthening of the part is carried out at locations likely to be subjected to particular stress.

2. Method according to claim 1, **characterised in that** the steel contains B and Ti and that the content of Ti is equal to at least 3.5 times the N content of the steel.

3. Method according to one of claims 1 and 2, **characterised in that** the content of C in the steel is between 0.06 and 0.20%.

4. Method according to claim 3, **characterised in that** the Mn content of the steel is between 0.5 and 1.5 %, and the Cr content is between 0.5 and 1.5%.

5. Method according to one of claims 3 or 4, **characterised in that** the Cu content of the steel is between 0.5 and 1.5%.

6. Method according to one of claims 1 and 2, **characterised in that** the C content of the steel is between 0.25 and 0.35%, the Si content ranges from traces to 0.5%, the Mn content is between 0.8 and 2%, the Cr content is between 0.5 and 1.5%, the Mo content is between 0.05 and 0.20%, the B content is between 5 and 50 ppm, and the Ti content is between 0.005 and 0.04%.

7. Method according to one of claims 1 and 2, **characterised in that** the C content of the steel is between 0.20 and 0.35%, the Si content is between 0.5 and 2%, the Mn content is between 0.8 and 2%, the chromium content is between 0.5 and 1.5%, the molybdenum content is between 0.05 and 0.20%, the boron content ranges from traces to 50 ppm, and the Ti content ranges from traces to 0.04%.

8. Method according to claim 7, **characterised in that** tempering is carried out at 300-500°C over a period of 1 to 3 hours after the machining or after the controlled air-cooling and before the machining.

9. Method according to one of claims 1 to 8, **characterised in that** mechanical strengthening operation is roller-burnishing.

10. Method according to claim 9, **characterised in that** the part consists of a crankshaft for an internal combustion engine.

11. Method according to claim 10, **characterised in that** the mechanical strengthening operation is carried out on the connecting fillets of the pins and bearings of the crankshaft.

## Patentansprüche

1. Verfahren zur Herstellung eines geschmiedeten Teils aus Stahl, **dadurch gekennzeichnet, dass**:
- ein Stahl erschmolzen und gegossen wird mit der Zusammensetzung von, in Gew.-%, 0,06% ≤ C ≤ 0,35%; 0,5% ≤ Mn ≤ 2%; Spuren ≤ Si ≤ 2%; Spuren ≤ Ni ≤ 1,5%; Spuren < Al ≤ 0,1%; Spuren ≤ Cr ≤ 1,5%; Spuren ≤ Mo ≤ 0,30%; Spuren ≤ V ≤ 0,5%, Spuren ≤ Cu ≤ 1,5%, optional 5 bis 50 ppm B; optional 0,005 bis 0,04% Ti, optional 0,005 bis 0,06% Nb, optional 0,005 bis 0,2% S; zumindest eines der Elemente Ca bis zu 0,007%, Te bis zu 0,03%, Se bis zu 0,05%, Bi bis zu 0,15% und Pb bis zu 0,15%; wobei der Rest aus Eisen und erschmelzungsbedingten Verunreinigungen besteht;
- ein Rohling des Teils bei einer Temperatur von 1100 bis 1300°C geschmiedet wird;
- eine kontrollierte Abkühlung des Rohlings des Teils in ruhiger Luft oder Umwälzluft bei einer Geschwindigkeit von weniger oder gleich 3°C/s zwischen 600 und 300°C vorgenommen wird, welche dem Rohling eine bainitische Mikrostruktur verleiht;
- eine Bearbeitung des Teils vorgenommen wird;
- ein mechanischer Verstärkungsvorgang des Teils an den Stellen durchgeführt wird, welche dazu berufen sind, besonders beansprucht zu werden.

2. Verfahren gemäß Anspruch 1, **dadurch gekennzeichnet, dass** der Stahl B und Ti enthält, und dass der Ti-Gehalt gleich zumindest 3,5 mal des Gehalts an N des Stahls ist.

3. Verfahren gemäß einem der Ansprüche 1 bis 2, **dadurch gekennzeichnet, dass** der C-Gehalt des Stahls zwischen 0,06 und 0,20% liegt.

4. Verfahren gemäß Anspruch 3, **dadurch gekennzeichnet, dass** der Mn-Gehalt des Stahls zwischen 0,5 und 1,5% liegt, und dass der Cr-Gehalt zwischen 0,5 und 1,5% liegt.

5. Verfahren gemäß einem der Ansprüche 3 oder 4, **dadurch gekennzeichnet, dass** der Cu-Gehalt des Stahls zwischen 0,5 und 1,5% liegt.

6. Verfahren gemäß einem der Ansprüche 1 bis 2, **dadurch gekennzeichnet, dass** der C-Gehalt des Stahls zwischen 0,25 und 0,35% liegt, der Si-Gehalt zwischen einigen Spuren und 0,5% liegt, der Mn-Gehalt zwischen 0,8 und 2% liegt, der Cr-Gehalt zwischen 0,5 und 1,5% liegt, der Mo-Gehalt zwischen 0,05 und 0,20% liegt, der B-Gehalt zwischen 5 und 50 ppm liegt und der Ti-Gehalt zwischen 0,005 und 0,04% liegt.

7. Verfahren gemäß einem der Ansprüche 1 bis 2, **dadurch gekennzeichnet, dass** der C-Gehalt des Stahls zwischen 0,20 und 0,35% liegt, der Si-Gehalt zwischen 0,5 und 2% liegt, der Mn-Gehalt zwischen 0,8 und 2% liegt, der Chrom-Gehalt zwischen 0,5 und 1,5% liegt, der Molybdän-Gehalt zwischen 0,05 und 0,20% liegt, der Bor-Gehalt zwischen einigen Spuren und 50 ppm liegt und der Ti-Gehalt zwischen 0,005 und 0,04% liegt.

8. Verfahren gemäß Anspruch 7, **dadurch gekennzeichnet, dass** eine Aushärtung bei 300 - 500°C während 1 bis 3 h nach der Bearbeitung oder nach der kontrollierten Abkühlung an der Luft und vor der Bearbeitung durchgeführt wird.

9. Verfahren gemäß einem der Ansprüche 1 bis 8, **dadurch gekennzeichnet, dass** der Vorgang der mechanischen Verstärkung ein Glattwalzen ist.

10. Verfahren gemäß Anspruch 9, **dadurch gekennzeichnet, dass** das Teil von einer Kurbelwelle für einen Verbrennungsmotor gebildet ist.

11. Verfahren gemäß Anspruch 10, **dadurch gekennzeichnet, dass** der Vorgang der mechanischen Verstärkung an den Anschlußhohlkehlen der Kurbelzapfen und den Lagern der Kurbelwelle durchgeführt wird.
